# EUROPÄISCHE PATENTSCHRIFT

(11) **EP 2 550 905 B1**
(45) Veröffentlichungstag und Bekanntmachung des Hinweises auf die Patenterteilung: **12.11.2014**
(21) Anmeldenummer: 12176395.7
(22) Anmeldetag: 13.07.2012
(51) Int. Cl.: A47J 43/07, A47J 43/08

(54) **Handrührer**
Mélangeur manuel
Hand mixer

(30) Priorität: 29.07.2011 DE 102011080129
(43) Veröffentlichungstag der Anmeldung: 30.01.2013
(73) Patentinhaber: BSH Bosch und Siemens Hausgeräte GmbH, 81739 München (DE)
(72) Erfinder: Danijel, Roman, 3312 Ljubno (SI); Golavsek, Samo, 3312 Prebold (SI); Semeja, Uros, 3327 Smartno ob Paki (SI)

(56) Entgegenhaltungen:
- EP-B1- 1 191 870
- FR-A1- 2 795 938

## Beschreibung

### Gebiet der Erfindung

Die Erfindung betrifft einen Handrührer mit einem Gehäuse, einer Antriebseinrichtung mit einem Motor, einer durch eine erste Öffnung des Gehäuses zugänglichen ersten Kupplungseinrichtung zum Ankuppeln eines Rührwerkzeugs an die Antriebseinrichtung und einer durch eine zweite Öffnung des Gehäuses zugänglichen zweiten Kupplungseinrichtung zum Ankuppeln eines Mixwerkzeugs an die Antriebseinrichtung.

### Hintergrund der Erfindung

Aus DE 600 06 695 T2 ist ein in der Hand zu haltendes elektrisches Rühr- und Mixgerät bekannt, das zum selektiven Antrieb mindestens eines Rühransatzes oder eines mit hoher Geschwindigkeit drehenden Mixansatzes dient. Das Rühr- und Mixgerät weist einen elektrischen Antriebsmotor und zwei Kupplungsvorrichtungen auf, die mit der Welle des Motors verbunden sind und über jeweils zwei Eingriffsdurchlässe zur Aufnahme des Rühransatzes bzw. des Mixansatzes dienen. Das Rühr- und Mixgerät weist außerdem ein Sicherheitselement auf, das zwischen einer Ruhestellung, in welcher der Mixansatz in seine Kupplungsvorrichtung eingesetzt ist, und einer ausgerückten Stellung, in welche das Sicherheitselement infolge des Einsetzens des Rühransatzes in seine Kupplungsvorrichtung gebracht wird, bewegbar montiert ist.

Das Sicherheitselement wirkt derart mit einem Bedienungshebel zusammen, dass zum Betrieb des Mixansatzes der Bedienungshebel vom Benutzer gegen eine Federkraft gehalten werden muss, wobei der Bedienungshebel automatisch in eine Stoppstellung zurückkehrt, wenn das Gerät aus der Hand des Benutzers gleitet. Andererseits hält der Bedienungshebel beim Betrieb des Rühransatzes jede seiner Schaltstellungen, in die er vom Benutzer gebracht worden ist. Das Sicherungselement ist auch geeignet, entweder die Anwesenheit des Mixansatzes oder die Anwesenheit des Rühransatzes anzuzeigen. Eine Fehlbedienung durch gleichzeitiges Einsetzen des Rühr- und des Mixansatzes kann jedoch nicht genügend sicher ausgeschlossen werden. Das Problem einer Verschmutzung der jeweils nicht benutzten Kupplungsvorrichtung durch Eindringen von Partikeln oder Flüssigkeiten wird nicht diskutiert.

In DE 696 00 634 T2 ist ein elektrisch betriebener Handschläger und -mixer beschrieben, mit einem Körper von im Ganzen prismatischer Form, der einen elektrischen Antriebsmotor enthält, mit einer drehbaren Kupplungsvorrichtung für einen Schlagzusatz und einer Öffnung für den Durchtritt eines Mixzusatzes zum Verbinden mit der Welle des Motors und mit einem Ausstoßelement zum Freigeben des Schlagzusatzes unter der Wirkung eines handbetätigten Steuerelements. Weiterhin ist eine mechanische Sicherheitsvorrichtung vorgesehen, die aus einem Gestänge oder Stangen aus Metall besteht, die durch eine elastische Rückstellvorrichtung beaufschlagt ist und die so mit dem Ausstoßelement und einem Schaft zum Einsetzen des Mixzusatzes zusammenwirkt, das entweder nur das Einsetzen des Schlagzusatzes oder nur das Einsetzen des Mixzusatzes ermöglicht wird. Die Öffnung für den Mixzusatz kann durch ein handbetätigtes Verstellelement geschlossen werden. Mögliche Sicherheitsrisiken bei einer Fehlbedienung durch einen unabsichtlichen Eingriff des Benutzers in die jeweils nicht benutzte Kupplungsvorrichtung sowie das Problem einer Verschmutzung der Kupplungsvorrichtung für den Schlagzusatz werden nicht angesprochen.

Gemäß EP 1 191 870 B1 weist ein elektrisches Handrühr- und Mixgerät für den Antrieb von mindestens einem Rühransatz oder einem Mixansatz eine Sicherheitseinrichtung mit einem mechanisch verschiebbaren Teil auf, das die Eintrittsöffnung des Mixansatzes blockieren kann und das auch geeignet ist, die Eintrittsöffnung für den Rühransatz zu blockieren. Hierfür ist das mechanische Teil im Körper des Handrühr- und Mixgeräts in der Nähe der Innenseite der unteren Wand des Körpers horizontal verschiebbar montiert. Ein unabsichtlicher Eingriff eines Benutzers oder ein Eindringen von Partikeln oder Flüssigkeiten in die Eintrittsöffnung für den Mixansatz kann hierdurch nicht verhindert werden.

### Der Erfindung zugrundeliegende Aufgabe

Der Erfindung liegt die Aufgabe zugrunde, einen Handrührer der eingangs genannten Art anzugeben, mit dem die Sicherheit auch für den Fall einer Fehlbedienung erhöht werden kann. Insbesondere soll ein gleichzeitiges Einsetzen eines Rührwerkzeugs und eines Mixwerkzeugs mit einer erhöhten Sicherheit verhindert werden können. Ferner soll möglichst auch ein unabsichtlicher Eingriff eines Benutzers und/oder eine Verschmutzung durch Eindringen von Partikeln oder Flüssigkeiten in die jeweils nicht benutzte Öffnung des Gehäuses vermieden werden können.

### Erfindungsgemäße Lösung

Die Bezugszeichen in sämtlichen Ansprüchen haben keine einschränkende Wirkung, sondern sollen lediglich deren Lesbarkeit verbessern.

Die Lösung der gestellten Aufgabe gelingt durch einen Handrührer mit den Merkmalen des Anspruchs 1.

Ein erfindungsgemäßer Handrührer weist ein Gehäuse auf, das insbesondere einen Handgriff zum Halten des Handrührers bei der Benutzung durch einen Benutzer umfassen kann und das ansonsten beispielsweise annähernd prismatisch geformt sein kann. Innerhalb des Gehäuses ist eine Antriebseinrichtung aufgenommen, die einen elektrischen Motor und ggf. ein Getriebe umfasst. Die Antriebseinrichtung kann insbesondere eine Mehrzahl von durch den Motor ggf. über das Getriebe antreibbaren Wellen umfassen, die in unterschiedliche Richtungen gerichtete Drehachsen aufweisen können und mit unterschiedlichen Unter- bzw. Übersetzungen mit dem Motor verbunden sein können. Der Handrührer weist ferner eine erste Kupplungseinrichtung zum Ankuppeln eines Rührwerkzeugs an die Antriebseinrichtung auf, wobei die erste Kupplungseinrichtung durch eine erste Öffnung des Gehäuses von außen zugänglich ist, sowie eine zweite Kupplungseinrichtung zum Ankuppeln eines Mixwerkzeugs an die Antriebseinrichtung, wobei die zweite Kupplungseinrichtung durch eine zweite Öffnung des Gehäuses von außen zugänglich ist. Der Handrührer kann ferner Bedienelemente zum Ansteuern des Motors und/oder zum Auswerfen des Rühr- bzw. des Mixwerkzeugs aus der jeweiligen Kupplungseinrichtung aufweisen.

Die erste und die zweite Öffnung definieren näherungsweise eine erste und eine zweite Öffnungsebene, die nicht miteinander zusammenfallen, d.h. nicht in einer Ebene angeordnet sind, und insbesondere auch nicht parallel zueinander liegen. Das Gehäuse kann im Bereich der Öffnungen eine gekrümmte Oberfläche aufweisen, was etwa aus Sicherheits- oder Handhabungsgründen vorteilhaft sein; in diesem Fall definieren die erste und/oder die zweite Öffnung nicht exakt eine Ebene. Durch die erste und die zweite Kupplungseinrichtung werden ferner eine erste und eine zweite Kupplungsrichtung zum Einsetzen der jeweiligen Werkzeuge in die betreffende Kupplungseinrichtung, die im Wesentlichen senkrecht zur jeweiligen Öffnungsebene stehen, definiert. Die erste und die zweite Kupplungsrichtung sind somit insbesondere nicht parallel zueinander gerichtet. Dies ist im Hinblick auf die Handhabung des Handrührers vorteilhaft, da ein Rühr- und ein Mixwerkzeug in der Regel unterschiedliche Längen aufweisen, bei der Benutzung unterschiedlich gehalten werden und daher eine unterschiedliche Ausrichtung des Handgriffs des Handrührers zum jeweiligen Werkzeug notwendig ist.

Erfindungsgemäß weist der Handrührer ein relativ zum Gehäuse verschiebbar gelagertes formveränderliches Verschlusselement auf zum wechselweisen Verschließen der ersten Öffnung oder der zweiten Öffnung. Das formveränderliche Verschlusselement ist daher derart ausgebildet und angeordnet, dass entweder nur die erste Öffnung oder nur die zweite Öffnung geöffnet ist und die jeweils andere Öffnung geschlossen ist. Somit ist jeweils nur eine Öffnung geöffnet, so dass zu jedem Zeitpunkt nur in eine Öffnung ein Werkzeug in den Handrührer eingesetzt werden kann.

Hierdurch kann nicht nur besonders sicher verhindert werden, dass gleichzeitig ein Rührwerkzeug und ein Mixwerkzeug in die jeweilige Kupplungseinrichtung des Handrührers eingesetzt und mit der Antriebseinrichtung verbunden werden, sondern es ist auch der Vorteil erreichbar, dass ein versehentlicher Eingriff in die jeweils nicht benutzte Öffnung verhindert wird. Auf diese Weise ist eine besonders hohe Sicherheit gegen Fehlbedienungen erreichbar. Ferner ist der weitere Vorteil erreichbar, dass ein Eindringen von Partikeln, wie etwa Mehlstaub, sowie von Flüssigkeitsspritzern durch die Öffnungen in das Innere des Gehäuses, insbesondere in die Kupplungseinrichtungen, weitgehend vermieden werden kann. Hierdurch kann sowohl die Sicherheit bei der Benutzung des Handrührers als auch die Lebensdauer des Handrührers gesteigert werden. Dadurch, dass das Verschlusselement formveränderlich ausgebildet ist, ist trotz der nicht übereinstimmenden und nicht parallelen Öffnungsebenen auf einfache und sichere Weise ein abwechselndes Öffnen und Verschließen der ersten oder der zweiten Öffnung erreichbar.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Gemäß einer bevorzugten Ausführungsform der Erfindung umfasst das Verschlusselement mindestens eine erste Verschlussklappe zum Verschließen der ersten Öffnung und mindestens eine zweite Verschlussklappe zum Verschließen der zweiten Öffnung. Hierdurch ist auf einfache Weise ein weitgehendes und sicheres Öffnen und Verschließen der Öffnungen erreichbar. Insbesondere können die mindestens eine erste bzw. die mindestens eine zweite Verschlussklappe derart stabil ausgebildet sein, dass auch beim versehentlichen Ansetzen des Rühr- bzw. Mixwerkzeugs die jeweilige Öffnung sicher verschlossen bleibt und eine Beschädigung der Verschlussklappe vermieden wird

Gemäß einer besonders bevorzugten Ausführungsform der Erfindung sind die mindestens eine erste Verschlussklappe und/oder die mindestens eine zweite Verschlussklappe starr ausgebildet und durch mindestens ein auf Druck und Zug belastbares formveränderliches Verbindungselement miteinander verbunden. Die Verschlussklappen können einstückig mit dem Verbindungselement ausgebildet sein oder mit diesem durch Klebung, Verschraubung, Vernietung oder in einer anderen Weise verbunden sein. Ein derartiges flexibles, auf Druck und Zug belastbares Verbindungselement gewährleistet eine sichere richtungsunabhängige Kopplung der insbesondere starr ausgebildeten mindestens einen ersten und mindestens einen zweiten Verschlussklappe bei einer Verschiebebewegung des Verschlusselements relativ zum Gehäuse.

Das flexible Verbindungselement kann in vorteilhafter Weise als mindestens eine, bevorzugt zwei flexible Zug-/Druckstangen ausgebildet sein. Derartige Zug-/Druckstangen können beispielsweise aus einem flexiblen Kunststoff oder auch aus Metall hergestellt sein. Hierdurch ist auf einfache Weise die Übertragung sowohl einer Zugkraft als auch einer Druckkraft zwischen der mindestens einen ersten Verschlussklappe und der mindestens einen zweiten Verschlussklappe erreichbar.

In bevorzugter Weise ist das formveränderliche Verschlusselement an der Innenseite einer Außenwand des Gehäuses verschiebbar geführt. Dabei kann insbesondere eine Führung entlang eines gekrümmten Bereichs der Außenwand des Gehäuses vorgesehen sein, wodurch ein Abheben unter Zugkräften vermieden werden kann. Der gekrümmte Bereich der Außenwand des Gehäuses kann beispielsweise ein Eckbereich sein, etwa ein Übergangsbereich zwischen einer Unterseite und einer Rückseite des Gehäuses. In besonders bevorzugter Weise wird das Verbindungselement durch Führungen, etwa Führungsnuten, geführt, um nicht nur ein Abheben unter Zugkräften in gekrümmten Bereichen, sondern auch eine Buckelbildung unter Druckkräften zu vermeiden. Hierdurch werden eine sichere Führung und ein sicherer Verschluss der Öffnungen des Gehäuses ermöglicht. Insbesondere sind hierdurch ein sicheres Zusammenwirken der mindestens einen ersten und der mindestens einen zweiten Verschlussklappe zum abwechselnden Verschließen der in unterschiedlichen Ebenen angeordneten Öffnungen erreichbar.

Weiterhin ist es bevorzugt, dass das Verschlusselement eine Handhabe zum Betätigen des Verschlusselements, d.h. zum Öffnen bzw. Verschließen der Öffnungen, aufweist. Durch Verschieben der Handhabe kann das Verschlusselement derart verschoben werden, dass die erste Öffnung verschlossen und die zweite Öffnung geöffnet wird oder umgekehrt. Die Handhabe kann beispielsweise an der mindestens einen ersten oder an der mindestens einen zweiten Verschlussklappe angeordnet sein. Es können auch mehrere Handhaben vorhanden sein. In besonders bevorzugter Weise ist die Handhabe an der mindestens einen zweiten Verschlussklappe, die zum Verschließen der für das Mixwerkzeug vorgesehenen zweiten Öffnung dient, angeordnet. Hierdurch sind ein besonders einfacher konstruktiver Aufbau und eine besonders einfache Bedienung erreichbar.

Gemäß einer bevorzugten Ausführungsform der Erfindung wirkt das Verschlusselement mit einem Steuerungselement zum Ansteuern des Motors zusammen. So kann beispielsweise eine unterschiedliche Ansteuerung des Motors hinsichtlich der Leistung und/oder hinsichtlich verfügbarer Schaltstufen vorgesehen sein, je nachdem, ob ein Rühr- oder ein Mixwerkzeug einsetzbar bzw. eingesetzt ist. Hierdurch ist eine besonders einfache Bedienung bei einer möglichst vielseitigen Verwendbarkeit des Handrührers erreichbar.

Vorzugsweise weist das Verschlusselement eine Öse auf, die ein sich bereichsweise schräg zur Verschieberichtung des Verschlusselements erstreckendes Langloch ausbildet, in das ein mit dem Steuerungselement verbundenes Übertragungselement eingreift. Das Übertragungselement erfährt somit in Abhängigkeit von der Position des Verschlusselements unterschiedliche Auslenkungen. Das Steuerungselement kann derart mit dem Übertragungselement verbunden sein, dass in Abhängigkeit von der Auslenkung des Übertragungselements und damit von der Verschiebestellung des Verschlusselements unterschiedliche Steuerungsmöglichkeiten des Motors bereitgestellt werden, etwa unterschiedliche Schaltstufen, Drehzahlen und/oder Leistungen. Hierdurch ist eine besonders einfache und vielseitige Verwendung des Handrührers erreichbar.

In besonders bevorzugter Weise ist das Langloch gestuft ausbildet. Insbesondere weist das Langloch eine Stufe auf, die derart angeordnet ist, dass das Übertragungselement in einen Bereich vor der Stufe eingreift, wenn das Verschlusselement zum Verschließen der ersten Öffnung verschoben ist, und in einen Bereich hinter der Stufe, der eine von dem Bereich vor der Stufe unterschiedliche Höhe aufweist, eingreift, wenn das Verschlusselement zum Verschließen der zweiten Öffnung angeordnet ist. Das Übertragungselement nimmt somit unterschiedliche Höhen ein, je nachdem, welche Öffnung geöffnet ist. Hierdurch wird eine besonders einfache und vielseitige Steuerung des Handrührers ermöglicht.

Bevorzugt können die erste und die zweite Öffnungsebene näherungsweise senkrecht aufeinander stehen; auch die Kupplungsrichtungen stehen dann näherungsweise senkrecht aufeinander. In vorteilhafter Weise sind die erste und die zweite Öffnung an unterschiedlichen Seiten des Gehäuses angeordnet. So kann beispielsweise bei einem aus Fertigungs- und Ergonomiegründen näherungsweise prismatisch oder quaderförmig ausgebildeten Gehäuse das Rührwerkzeug von einer Unterseite einsetzbar sein, während das Mixwerkzeug von einer Rückseite einsetzbar ist. Hierdurch wird die Handhabung des Handrührers zur abwechselnden Benutzung eines Rühr- oder eines Mixwerkzeugs weiter erleichtert. Ferner ist hierdurch eine besonders einfache konstruktive Ausführung erreichbar.

Vorzugsweise umfasst das Rühr- und/oder das Mixwerkzeug, insbesondere das Rührwerkzeug, mehrere zusammenwirkende Teilwerkzeuge. Die jeweilige Kupplungseinrichtung umfasst in diesem Falle mehrere Kupplungen für die jeweiligen Teilwerkzeuge. Beispielsweise kann das erste Werkzeug als ein Paar von Rührbesen oder Knethaken ausgebildet sein, während das Mixwerkzeug als Stabmixansatz ausgebildet sein kann. Hierdurch kann eine besonders vielseitige Verwendbarkeit des Handrührers erreicht werden.

In bevorzugter Weise umfasst die erste und/oder die zweite Öffnung, insbesondere die erste Öffnung, mehrere Teilöffnungen. Die ersten und/oder die zweiten Verschlussmittel können dementsprechend eine Mehrzahl von Verschlussklappen aufweisen. Hierdurch ist eine besonders einfache konstruktive Ausgestaltung zum Antreiben von Rührwerkzeugen, die mehrere miteinander zusammenwirkende Teilwerkzeuge umfassen, erreichbar.

### Kurzbeschreibung der Zeichnungen

Weitere vorteilhafte Ausgestaltungen werden nachfolgend an Hand eines in den Zeichnungen dargestellten Ausführungsbeispiels, auf welches die Erfindung jedoch nicht beschränkt ist, näher beschrieben.

Es zeigen schematisch:
- Fig. 1: ein Ausführungsbeispiel eines erfindungsgemäßen Handrührers in einer geöffneten perspektivischen Ansicht;
- Fig. 2: das Ausführungsbeispiel eines erfindungsgemäßen Handrührers in einer geöffneten perspektivischen Ansicht mit eingesetztem Rührwerkzeug;
- Fig. 3: das Verschlusselement in der Form gemäß Fig. 2 in einer vergrößerten perspektivischen Ansicht;
- Fig. 4: das Ausführungsbeispiel des erfindungsgemäßen Handrührers in einer geöffneten perspektivischen Ansicht mit eingesetztem Mixwerkzeug;
- Fig. 5: das Verschlusselement in der Form gemäß Fig. 4 in einer vergrößerten perspektivischen Ansicht.

### Ausführliche Beschreibung anhand eines Ausführungsbeispiels

Bei der nachfolgenden Beschreibung einer bevorzugten Ausführungsform der vorliegenden Erfindung bezeichnen gleiche Bezugszeichen gleiche oder vergleichbare Komponenten. Der Übersichtlichkeit halber sind nicht in allen Figuren alle Bezugszeichen eingetragen.

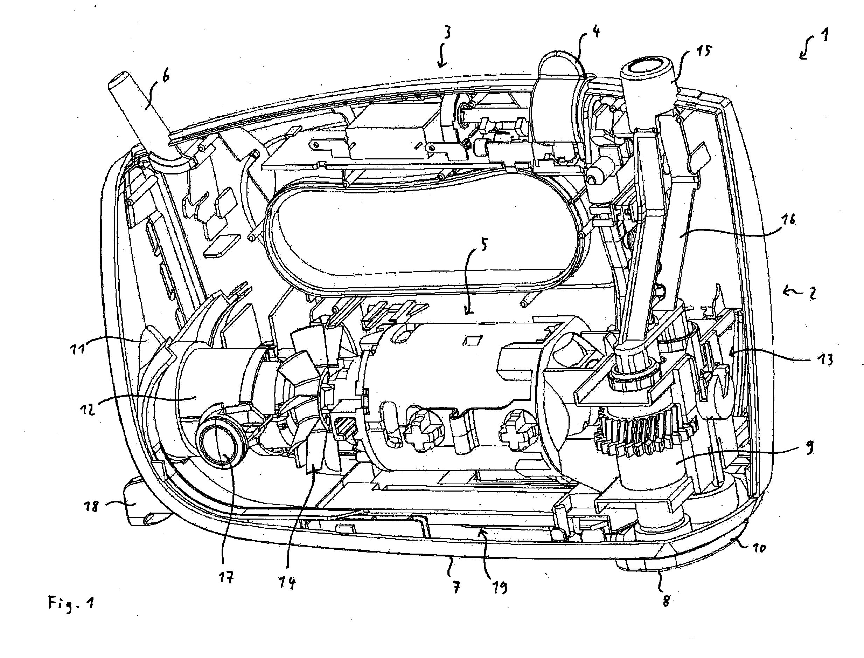

Ein Handrührer 1 weist gemäß Fig. 1 ein Gehäuse 2 mit einem Handgriff 3 auf, in dessen hinterem Bereich ein Drehschalter 4 zum Ansteuern eines im Gehäuse 2 angeordneten elektrischen Motors 5 angeordnet ist. Im rückwärtigen Bereich des Handgriffs 3 ist ein Knickschutz 6 für ein nicht dargestelltes Netzkabel vorgesehen. Der Handgriff 3 bildet mit dem übrigen Teil des Gehäuses 2 eine vom Gehäuse 2 allseitig umschlossene Eingriffsöffnung zum Halten des Handgriffs 3 mit einer Hand. Im Gehäuseboden 7 befinden sich zwei Öffnungen 8, durch die von außen ein Rührwerkzeug in zwei innerhalb des Gehäuses 2 angeordnete Kupplungen eingesetzt werden kann, wovon nur eine Kupplung 9 in Fig. 1 sichtbar ist. Zur Erleichterung des Einsetzens kann am Gehäuse ein kurzer Stutzen 10 vorstehen. An der Rückseite des Gehäuses ist durch eine Öffnung 11 eine innerhalb des Gehäuses 2 angeordnete Kupplung 12 zum Einsetzen eines Mixwerkzeugs zugänglich. Der Motor 5 treibt über ein Schneckengetriebe 13 die Kupplungen 9 für das Rührwerkzeug an. Ferner treibt die Motorwelle die Kupplung 12 für das Mixwerkzeug an. Zur Kühlung des Motors ist die Motorwelle mit einem Flügelrad 14 versehen. Ferner sind ein Betätigungselement 15 zum Betätigen eines Auswerfers 16 zum Lösen und Auswerfen des Rührwerkzeugs sowie ein Betätigungselement 17 zum Lösen und Auswerfen des Mixwerkzeugs angeordnet. Im hinteren Bereich des Gehäuses 2 ist eine Aufstellhilfe 18 angeordnet.

Auf der Innenseite der Außenwand des Gehäuses 2 im Bereich zwischen der Öffnung 8 für das Rührwerkzeug und der Öffnung 11 für das Mixwerkzeug ist ein Verschlusselement 19 angeordnet, das am Gehäuseboden 7, im Bereich der Öffnung 11 der rückwärtigen Gehäusewand und im dazwischenliegenden Übergangsbereich des Gehäuses 2 verschiebbar gelagert ist. Die Funktion und der Aufbau des Verschlusselements 19 werden anhand der nachfolgenden Figuren erläutert.

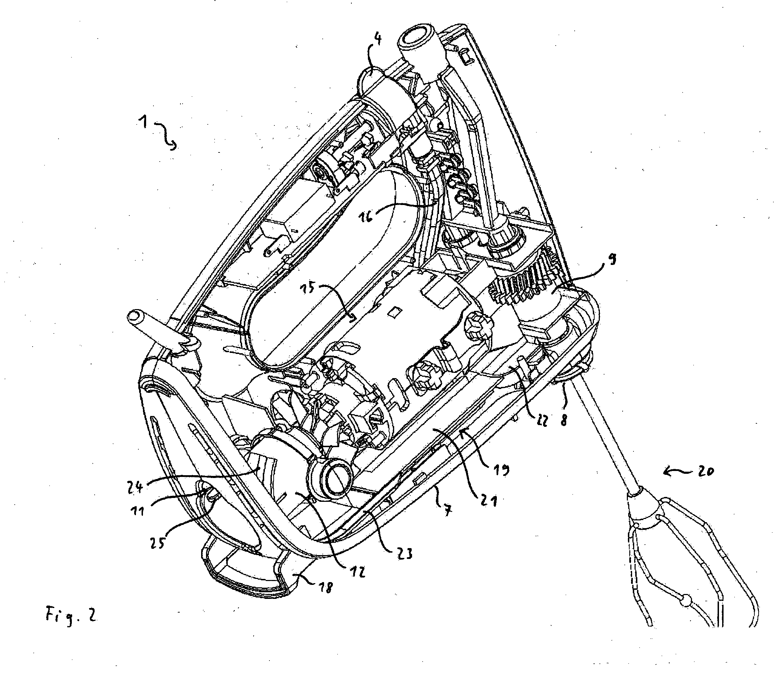

In Fig. 2 ist der Handrührer (1) in einer geöffneten perspektivischen Ansicht mit eingesetztem Rührwerkzeug gezeigt. Als Rührwerkzeug ist ein Rührbesen 20 durch die Öffnung 8 in die Kupplung 9 eingesetzt und in dieser gehalten; ein weiterer Rührbesen kann in die daneben angeordnete, in Fig. 2 nicht sichtbare Kupplung eingesetzt werden. Das Verschlusselement 19 umfasst eine Platte 21, an deren vorderes Ende zwei nach unten abgekröpfte Verschlussklappen 22 angeformt sind, von denen in Fig. 2 nur eine erkennbar ist. In der in Fig. 2 gezeigten Stellung befindet sich das Verschlusselement 19 in einer hinteren Position, in der die Verschlussklappen 22 die Öffnungen 8 im Gehäuseboden 7, durch die die Rührbesen 20 in die Kupplungen 9 eingesetzt werden können, frei geben.

Das Verschlusselement 19 umfasst ferner zwei flexible Zug-/Druckstangen 23, die am hinteren Ende der Platte 21 ansetzen und von denen in Fig. 2 nur eine sichtbar ist. Die Zug-/Druckstangen 23 stellen eine Verbindung der Platte 21 mit einer Verschlussklappe 24 dar, die in der in Fig. 2 gezeigten Stellung die Öffnung 11 zum Einsetzen eines Mixwerkzeugs verschließt. Die Verschlussklappe 24 trägt eine Handhabe 25, über die ein Benutzer die Verschlussklappe 24 und die damit verbundenen Zug-/Druckstangen 23, die Platte 21 und die Verschlussklappen 22 verschieben kann.

Die Verschlussklappe 24 ist entsprechend der Form des Gehäuses 2 im betreffenden Bereich gekrümmt ausgebildet. Zur Führung der Verschlussklappe 24 entlang einer gekrümmten Bahn und/oder der Zug-/Druckstangen 23 können entsprechende Nuten auf der Innenseite des Gehäuses 2 vorgesehen sein. Die Verschlussklappe 24 kann ausgebildet sein, um die Öffnung 11 weitgehend dicht zu verschließen, kann aber auch beispielsweise perforiert ausgebildet sein, um einen Luftzustrom zur Kühlung des Motors 5 zu ermöglichen. In der in Fig. 2 gezeigten Stellung des Verschlusselements 19 ist ein Einsetzen eines Mixwerkzeugs nicht möglich.

Die Platte 21 des Verschlusselements 19 ist mit den Verschlussklappen 22 in einer Längsrichtung des Gehäuses 2 verschiebbar. Die Verschlussklappe 24 ist im Wesentlichen quer dazu verschiebbar, wobei der Übergang zwischen der Längs- und der Querbewegung durch die Zug-Druckstangen 23 vermittelt wird. Insgesamt ist das Verschlusselement 19 als Einheit verschiebbar, jedoch mit aufgrund der Verschiebung veränderbarer Form. Mit dem Verschlusselement 19 ist ein in einer Querrichtung des Gehäuses 2 verschiebbares Übertragungselement 26 gekoppelt, dessen Funktion unten näher erläutert wird.

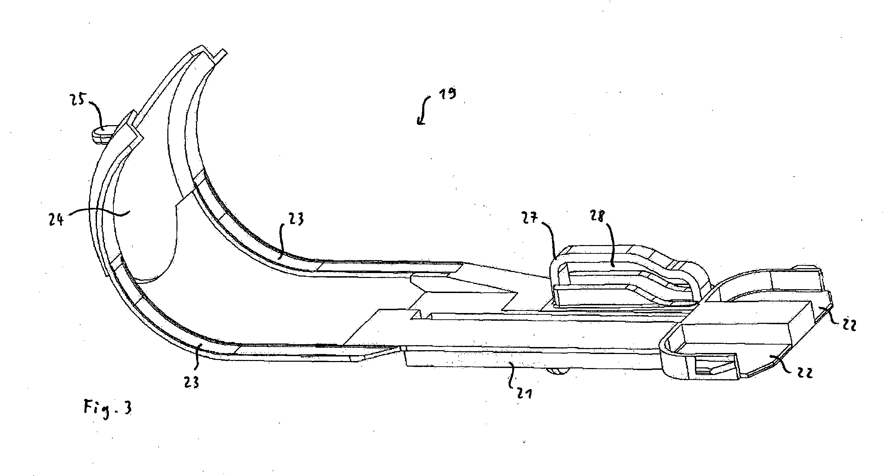

Wie in Fig. 3 in vergrößerter Darstellung gezeigt, umfasst das Verschlusselement 19 die Verschlussklappen 22, die Platte 21, die Zug-/Druckstangen 23 und die Verschlussklappe 24 mit der Handhabe 25. Während die Platte 21 und die Verschlussklappen 22, 24 bevorzugt im Wesentlichen starr ausgebildet sind, sind die Zug-/Druckstangen 23 flexibel, insbesondere elastisch, ausgebildet und aufgrund der in Fig. 2 eingenommenen Position entsprechend der Form des Gehäuses 2 im betreffenden Bereich nach oben gebogen. Die Platte 21 sowie die Verschlussklappen 22 sind im gezeigten Ausführungsbeispiel durch längs und quer zur Verschieberichtung verlaufende Rippen bzw. Sicken verstärkt. Die Platte 21 trägt eine Öse 27, die ein gestuftes Langloch 28 umschließt. In dieses greift das Übertragungselement 26 ein. Das Übertragungselement ist innerhalb des Gehäuses 2 in einer vertikalen Richtung verschiebbar geführt und nimmt je nach Verschiebeposition des Verschlusselements 19 eine obere oder eine untere Stellung ein.

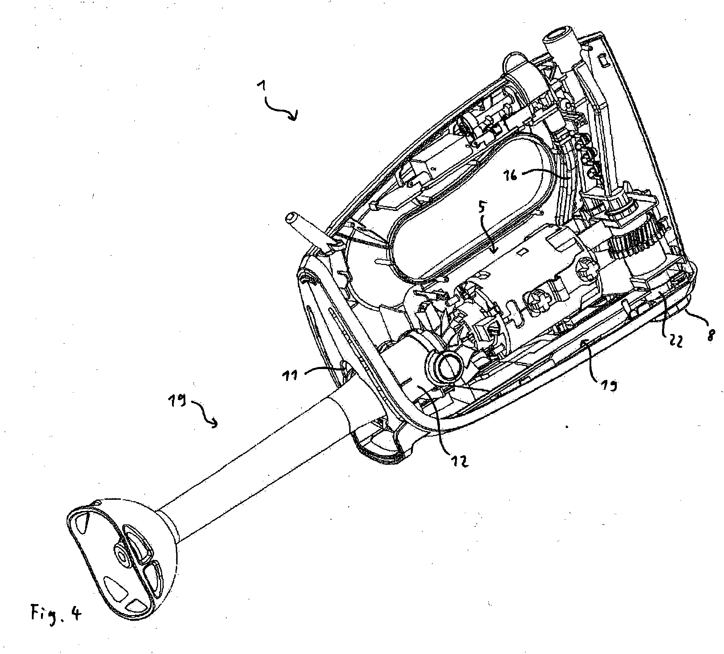

In Fig. 4 ist dargestellt, dass in den Handrührer 1 ein Mixwerkzeug, nämlich ein Schnellmixstab 29, eingesetzt und über die entsprechende Kupplung 12 durch den Motor 5 antreibbar ist. Hierfür befindet sich die Verschlussklappe 24 in einer unteren, in Fig. 4 nicht erkennbaren Position, in der die Öffnung 11 zum Einsetzen des Mixwerkzeugs freigegeben ist. In Fig. 3 nimmt das Verschlusselement 19 eine vordere Position ein, in der die Verschlussklappen 22 die Öffnung 8 zum Einsetzen des Rührwerkzeugs verschließen. In dieser Position ist ein Einsetzen des Rührwerkzeugs nicht möglich.

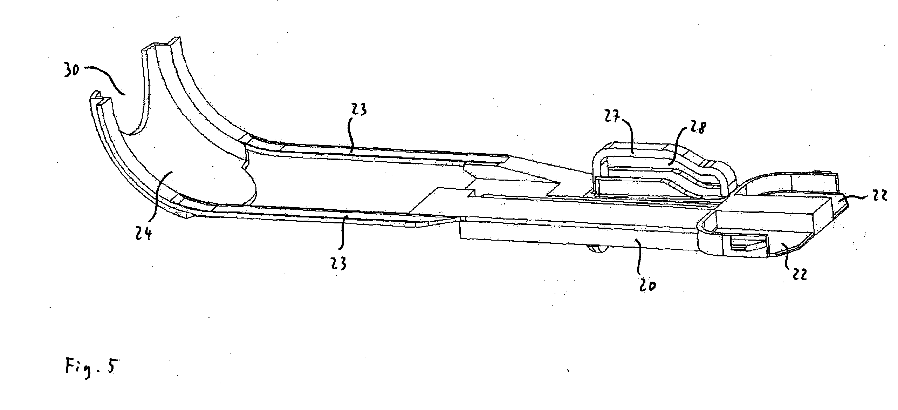

Wie in Fig. 5 gezeigt ist, nimmt das Verschlusselement 19 in der in Fig. 4 dargestellten vorderen Position eine Form an, in der die Zug-/Druckstangen 23 nahezu gestreckt sind. Die Verschlussklappe 24 befindet sich in einer unteren Position, wodurch eine näherungsweise halbkreisförmige Ausnehmung 30 mit der Öffnung 11 zur Deckung kommt und diese dadurch freigegeben wird (s. Fig. 4).

Zur Benutzung des Handrührers 1 mit einem Rührwerkzeug, beispielsweise den Rührbesen 20, wird die Handhabe 25 in eine obere Position gebracht. In dieser Position ist die Öffnung 11 zum Einsetzen eines Mixwerkzeugs durch die Verschlussklappe 24 verschlossen und die Öffnung 8 zum Einsetzen des Rührwerkzeugs geöffnet. In diesem Zustand können die Rührbesen 20 in die Kupplungen 9 eingesetzt und durch Betätigung des Betriebsschalters 4 vom Motor 5 angetrieben werden.

Soll nun ein Mixwerkzeug, beispielsweise ein Schnellmixstab 19, angesetzt werden, so sind zunächst die Rührbesen 20 durch Betätigung des Auswerfers 16 mit dem Betätigungselement 15 auszuwerfen. Sodann ist die Handhabe 25 aus der in Fig. 2 gezeigten oberen Position in eine untere Position zu schieben, in der die Öffnung 11 freigegeben wird und der Schnellmixstab 29 in die Kupplung 12 eingesetzt werden kann. Durch Verschieben der Verschlussklappe 24 mit Hilfe der Handhabe 25 wird über die Zug-/Druckstangen 23 die Platte 21 in die in Fig. 4 gezeigte vordere Position verschoben, in der die Verschlussklappen 22 die Öffnungen 8 verschließen. Es kann daher nun kein Rührwerkzeug eingesetzt werden.

Gleichzeitig gelangt das Übertragungselement 26 aufgrund der Form des Langlochs 28, in das das Übertragungselement 26 eingreift, aus der unteren in die obere Position. Durch das Zusammenwirken des Übertragungselements 26 mit dem Drehschalter 4 kann dieser die für den Betrieb des Mixwerkzeugs vorgesehenen Steuerungsfunktionen, beispielsweise hierfür geeignete Schaltstufen, bereitstellen.

Soll wieder mit einem Rührwerkzeug gearbeitet werden, so ist durch Betätigung des Betätigungselements 17 der Schnellmixstab 29 vom Handrührer 1 zu lösen und die Handhabe 25 in die obere Position zu bringen. Hierdurch wird die Platte 21 des Verschlusselements 19 nach hinten verschoben, so dass die Verschlussklappen 22 die Öffnungen 8 freigeben. Es kann nun wieder ein Rührwerkzeug eingesetzt werden. Ein Einsetzen eines Mixwerkzeugs ist nicht möglich. Ferner nimmt das Übertragungselement 26 seine untere Position ein, so dass über den Drehschalter die für den Betrieb des Rührwerkzeugs geeigneten Steuerungsfunktionen bereitgestellt werden können.

Mit der Erfindung kann vorteilhafterweise ein gleichzeitiges Einsetzen eines Rührwerkzeus und eines Mixwerkzeugs mit einer erhöhten Sicherheit verhindert werden. Ferner kann auch ein unabsichtlicher Eingriff eines Benutzers und/oder eine Verschmutzung durch Eindringen von Partikeln oder Flüssigkeiten in eine nicht benutzte Öffnung des Gehäuses vermieden werden.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Handrührer
- 2: Gehäuse
- 3: Handgriff
- 4: Drehschalter
- 5: Motor
- 6: Knickschutz
- 7: Gehäuseboden
- 8: Öffnung
- 9: Kupplung
- 10: Stutzen
- 11: Öffnung
- 12: Kupplung
- 13: Schneckengetriebe
- 14: Flügelrad
- 15: Betätigungselement
- 16: Auswerfer
- 17: Betätigungselement
- 18: Aufstellhilfe
- 19: Verschlusselement
- 20: Rührbesen
- 21: Platte
- 22: Verschlussklappe
- 23: Zug-/Druckstange
- 24: Verschlussklappe
- 25: Handhabe
- 26: Übertragungselement
- 27: Öse
- 28: Langloch
- 29: Schnellmixstab
- 30: Ausnehmung

## Patentansprüche

1. Handrührer (1) mit einem Gehäuse (2), einer Antriebseinrichtung mit einem Motor (5), einer durch eine erste Öffnung (8) des Gehäuses (2) zugänglichen ersten Kupplungseinrichtung zum Ankuppeln eines Rührwerkzeugs an die Antriebseinrichtung und einer durch eine zweite Öffnung (11) des Gehäuses (2) zugänglichen zweiten Kupplungseinrichtung zum Ankuppeln eines Mixwerkzeugs an die Antriebseinrichtung, wobei die Öffnungen (8, 11) näherungsweise eine erste und eine zweite Öffnungsebene definieren, die nicht miteinander zusammenfallen, **dadurch gekennzeichnet, dass** der Handrührer (1) ein relativ zum Gehäuse (2) verschiebbar gelagertes formveränderliches Verschlusselement (19) aufweist zum wechselweisen Verschließen der ersten Öffnung (8) oder der zweiten Öffnung (11).

2. Handrührer (1) nach Anspruch 1, **dadurch gekennzeichnet, dass** das Verschlusselement (19) mindestens eine erste Verschlussklappe (22) zum Verschließen der ersten Öffnung (8) und mindestens eine zweite Verschlussklappe (24) zum Verschließen der zweiten Öffnung (11) umfasst.

3. Handrührer (1) nach Anspruch 2, **dadurch gekennzeichnet, dass** die mindestens eine erste Verschlussklappe (22) und/oder die mindestens eine zweite Verschlussklappe (24) starr ausgebildet ist bzw. sind und die mindestens eine erste Verschlussklappe (22) und die mindestens eine zweite Verschlussklappe (24) durch mindestens ein auf Druck und Zug belastbares formveränderliches Verbindungselement miteinander verbunden sind.

4. Handrührer (1) nach Anspruch 3, **dadurch gekennzeichnet, dass** die mindestens eine erste Verschlussklappe (22) und die mindestens eine zweite Verschlussklappe (24) durch zwei flexible Zug-/Druckstangen (23) miteinander verbunden sind.

5. Handrührer (1) nach einem der vorhergehenden Ansprüche, **dadurch gekennzeichnet, dass** das Verschlusselement (19) an der Innenseite einer Außenwand des Gehäuses (2) verschiebbar geführt ist.

6. Handrührer (1) nach einem der vorhergehenden Ansprüche, **dadurch gekennzeichnet, dass** das Verschlusselement (19) eine Handhabe (25) zum Betätigen des Verschlusselements (19) aufweist.

7. Handrührer (1) nach einem der vorhergehenden Ansprüche, **dadurch gekennzeichnet, dass** das Verschlusselement (19) mit einem Steuerungselement zum Ansteuern des Motors (5) zusammenwirkt.

8. Handrührer (1) nach dem vorhergehenden Anspruch, **dadurch gekennzeichnet, dass** das Verschlusselement (19) eine Öse (27) aufweist, die ein sich bereichsweise schräg zur Verschieberichtung des Verschlusselements (19) erstreckendes Langloch (28) ausbildet, in das ein mit dem Steuerungselement verbundenes Übertragungselement (26) eingreift.

9. Handrührer (1) nach dem vorhergehenden Anspruch, **dadurch gekennzeichnet, dass** das das Langloch (27) gestuft ausgebildet ist und dass das Übertragungselement (26) in Abhängigkeit von einer Verschiebeposition des Verschlusselements (19) unterschiedliche Höhen einnimmt.

10. Handrührer (1) nach einem der vorhergehenden Ansprüche, **dadurch gekennzeichnet, dass** die erste und die zweite Öffnungsebene näherungsweise senkrecht aufeinander stehen.

11. Handrührer (1) nach einem der vorhergehenden Ansprüche, **dadurch gekennzeichnet, dass** die erste Öffnung (8) und die zweite Öffnung (11) an unterschiedlichen Seiten des Gehäuses (2) angeordnet sind.

12. Handrührer (1) nach einem der vorhergehenden Ansprüche, **dadurch gekennzeichnet, dass** das Rührwerkzeug und/oder das Mixwerkzeug mehrere zusammenwirkende Teilwerkzeuge umfassen und dass die erste und/oder die zweite Kupplungseinrichtung mehrere Kupplungen (9, 12) für die Teilwerkzeuge aufweisen.

13. Handrührer (1) nach einem der vorhergehenden Ansprüche, **dadurch gekennzeichnet, dass** die erste Öffnung (8) und/oder die zweite Öffnung (11) mehrere Teilöffnungen umfassen.

## Claims

1. Hand mixer (1) comprising a housing (2), a drive arrangement with a motor (5), a first coupling arrangement which can be accessed via a first opening (8) of the housing (2) and allows the attachment of a mixing tool to the drive arrangement, and a second coupling arrangement which can be accessed via a second opening (11) of the housing (2) and allows the attachment of a blending tool to the drive arrangement, wherein the openings (8, 11) approximately define a first and a second opening plane which do not coincide, **characterised in that** the hand mixer (1) comprises a closing element (19) which has an adaptable shape and is so mounted relative to the housing (2) that it can be displaced, for the purpose of closing either the first opening (8) or the second opening (11).

2. Hand mixer (1) according to claim 1, **characterised in that** the closing element (19) comprises at least one first closing panel (22) for closing the first opening (8) and at least one second closing panel (24) for closing the second opening (11).

3. Hand mixer (1) according to claim 2, **characterised in that** the at least one first closing panel (22) and/or the at least one second closing panel (24) is so designed as to be rigid, and that the at least one first closing panel (22) and the at least one second closing panel (24) are connected together by means of at least one connecting element which has an adaptable shape and is able to endure compression and tension.

4. Hand mixer (1) according to claim 3, **characterised in that** the at least one first closing panel (22) and the at least one second closing panel (24) are connected together by means of two flexible pull/push rods (23).

5. Hand mixer (1) according to one of the preceding claims, **characterised in that** the closing element (19) is guided on the inner side of an external wall of the housing (2) in such a way that it can be displaced.

6. Hand mixer (1) according to one of the preceding claims, **characterised in that** the closing element (19) has a handle (25) for the purpose of working the closing element (19).

7. Hand mixer (1) according to one of the preceding claims, **characterised in that** the closing element (19) interacts with a control element for the purpose of controlling the motor (5).

8. Hand mixer (1) according to the preceding claim, **characterised in that** the closing element (19) has a lug (27) that forms an elongated hole (28) which sectionally extends obliquely relative to the displacement direction of the closing element (19), wherein a transmission element (26) that is connected to the control element engages into said elongated hole (28).

9. Hand mixer (1) according to the preceding claim, **characterised in that** the elongated hole (27) is so designed as to be stepped, and that the transmission element (26) assumes different heights as a function of the displacement position of the closing element (19).

10. Hand mixer (1) according to one of the preceding claims, **characterised in that** the first and the second opening plane are approximately perpendicular to each other.

11. Hand mixer (1) according to one of the preceding claims, **characterised in that** the first opening (8) and the second opening (11) are arranged on different sides of the housing (2).

12. Hand mixer (1) according to one of the preceding claims, **characterised in that** the mixing tool and/or the blending tool comprises a plurality of interacting tool parts, and that the first and/or the second coupling arrangement has a plurality of couplings (9, 12) for the tool parts.

13. Hand mixer (1) according to one of the preceding claims, **characterised in that** the first opening (8) and/or the second opening (11) comprises a plurality of subsidiary openings.

## Revendications

1. Mixeur (1) comprenant un boîtier (2), un dispositif d'entraînement doté d'un moteur (5), un premier dispositif d'accouplement accessible à travers une première ouverture (8) du boîtier (2), destiné à coupler un outil agitateur au dispositif d'entraînement, et un deuxième dispositif d'accouplement accessible à travers une deuxième ouverture (11) du boîtier (2), destiné à coupler un outil mélangeur au dispositif d'entraînement, les ouvertures (8, 11) définissant approximativement un premier et un deuxième plans d'ouverture qui ne coïncident pas l'un avec l'autre, **caractérisé en ce que** le mixeur (1) présente un élément de fermeture (19) pouvant changer de forme, logé de manière déplaçable par rapport au boîtier (2), destiné à fermer en alternance la première ouverture (8) ou la deuxième ouverture (11).

2. Mixeur (1) selon la revendication 1, **caractérisé en ce que** l'élément de fermeture (19) comprend au moins un premier clapet de fermeture (22) destiné à fermer la première ouverture (8) et au moins un deuxième clapet de fermeture (24) destiné à fermer la deuxième ouverture (11).

3. Mixeur (1) selon la revendication 2, **caractérisé en ce que** l'au moins un premier clapet de fermeture (22) et/ou l'au moins un deuxième clapet de fermeture (24) est réalisé de manière rigide resp.- sont réalisés de manière rigide et **en ce que** l'au moins un premier clapet de fermeture (22) et l'au moins un deuxième clapet de fermeture (24) sont reliés entre eux par au moins un élément de liaison pouvant changer de forme, résistant à la pression et à la traction.

4. Mixeur (1) selon la revendication 3, **caractérisé en ce que** l'au moins un premier clapet de fermeture (22) et/ou l'au moins un deuxième clapet de fermeture (24) sont reliés entre eux par deux tiges flexibles de compression/traction.

5. Mixeur (1) selon l'une quelconque des revendications précédentes, **caractérisé en ce que** l'élément de fermeture (19) est guidé de manière déplaçable sur le côté intérieur d'une paroi extérieure du boîtier (2).

6. Mixeur (1) selon l'une quelconque des revendications précédentes, **caractérisé en ce que** l'élément de fermeture (19) présente une prise (25) pour actionner l'élément de fermeture (19).

7. Mixeur (1) selon l'une quelconque des revendications précédentes, **caractérisé en ce que** l'élément de fermeture (19) coopère avec un élément de commande destiné à commander le moteur (5).

8. Mixeur (1) selon l'une quelconque des revendications précédentes, **caractérisé en ce que** l'élément de fermeture (19) présente un oeillet (27) qui forme un trou oblong (28) s'étendant en partie de manière inclinée par rapport au sens de déplacement de l'élément de fermeture (19), dans lequel trou oblong a prise un élément de transmission (26) relié à l'élément de commande.

9. Mixeur (1) selon l'une quelconque des revendications précédentes, **caractérisé en ce que** le trou oblong (27) est réalisé en escalier et **en ce que** l'élément de transmission (26) prend différentes hauteurs en fonction d'une position de déplacement de l'élément de fermeture (19).

10. Mixeur (1) selon l'une quelconque des revendications précédentes, **caractérisé en ce que** le premier et le deuxième plans d'ouverture sont situés approximativement verticalement l'un sur l'autre.

11. Mixeur (1) selon l'une quelconque des revendications précédentes, **caractérisé en ce que** la première ouverture (8) et la deuxième ouverture (11) sont disposées sur différents côtés du boîtier (2).

12. Mixeur (1) selon l'une quelconque des revendications précédentes, **caractérisé en ce que** l'outil agitateur et/ou l'outil mélangeur comprennent plusieurs parties d'outil coopérant et **en ce que** le premier et le deuxième dispositifs d'accouplement présentent plusieurs coupleurs (9, 12) pour les parties d'outil.

13. Mixeur (1) selon l'une quelconque des revendications précédentes, **caractérisé en ce que** la première ouverture (8) et/ou la deuxième ouverture (11) comprennent plusieurs ouvertures partielles.
